**Europäisches Patentamt**

**European Patent Office**

**Office européen des brevets**

(11) Publication number : **0 361 449 B1**

# EUROPEAN PATENT SPECIFICATION

(45) Date of publication of patent specification :
**19.02.92 Bulletin 92/08**

(51) Int. Cl.⁵: **B60S 1/16,** F16H 21/40

(21) Application number : **89117876.6**

(22) Date of filing : **27.09.89**

(54) A transmission unit for motor vehicle windscreen wipers.

(30) Priority : **28.09.88 IT 6786588**

(43) Date of publication of application :
**04.04.90 Bulletin 90/14**

(45) Publication of the grant of the patent :
**19.02.92 Bulletin 92/08**

(84) Designated Contracting States :
**DE ES FR GB IT SE**

(56) References cited :
**FR-A- 2 165 540**

(73) Proprietor : **INDUSTRIE MAGNETI MARELLI S.p.A.**
**Via Adriano 81**
**I-20128 Milano (IT)**

(72) Inventor : **Pedani, Giuseppe**
**Via Pacini, 66**
**I-20131 Milano (IT)**

(74) Representative : **Buzzi, Franco et al**
**c/o Jacobacci-Casetta & Perani S.p.A. Via Alfieri, 17**
**I-10121 Torino (IT)**

## Description

The present invention relates in general to motor vehicle windscreen wipers, and more particularly to headlamp and rear-screen wipers, according to the preamble of the claim.

Such a device conventionally includes a motor-driven input member which is driven in continuous rotation and is constituted, for example, by the final element of a geared reduction unit driven by an electric motor, and an output shaft to which an arm carrying the wiper blade is fixed. The input member and the output shaft have respective parallel and offset axes, and a transmission unit is interposed between them to transform the continuous rotation of the former into a reciprocating rotary motion of the latter.

According to the prior art, the transmission unit is generally constituted by a kinematic mechanism with a connecting rod and crank. A transmission of this type has considerable transverse bulk, such that its application to small windscreen wipers such as headlamp wipers is difficult, and is constituted by a considerable number of moving parts. Moreover, with a connecting-rod and crank transmission, it is difficult to have precise end-of travel positions for the output shaft, since the sliding contacts usually used for this function are arranged on the input member and all subsequent play between the components of the kinematic mechanism thus contributes to the imprecise repositioning of the output shaft, and hence of the blade-carrying arm.

The object of the present invention is to avoid the above disadvantages by the production of a transmission unit of the type defined above for motor vehicle windscreen wipers, which is constituted by a reduced number of parts, which is compact and easy to manufacture, and which ensures greater precision and reliability in operation.

According to the invention, this object is achieved by means of a transmission unit characterised in that it includes three circular eccentric discs which are interposed axially between the input member and the output shaft with their respective axes parallel to the axes, of the input member and the output shaft and of which:

- the first disc has its axis fixed to the input member and offset relative thereto,
- the second disc has an eccentric axial cavity in which the first disc is engaged concentrically for rotation,
- the third disc is fixed coaxially to the output shaft and has an eccentric axial cavity in which the second disc is engaged concentrically for rotation.

The invention will now be described in detail with reference to the appended drawings, provided purely by way of non-limiting example, in which:

Figure 1 is a schematic axial section of a transmission unit for windscreen wipers according to the invention,

Figure 2 is a section taken on the line II-II of Figure 1, and

Figure 3 shows a variant of Figure 2.

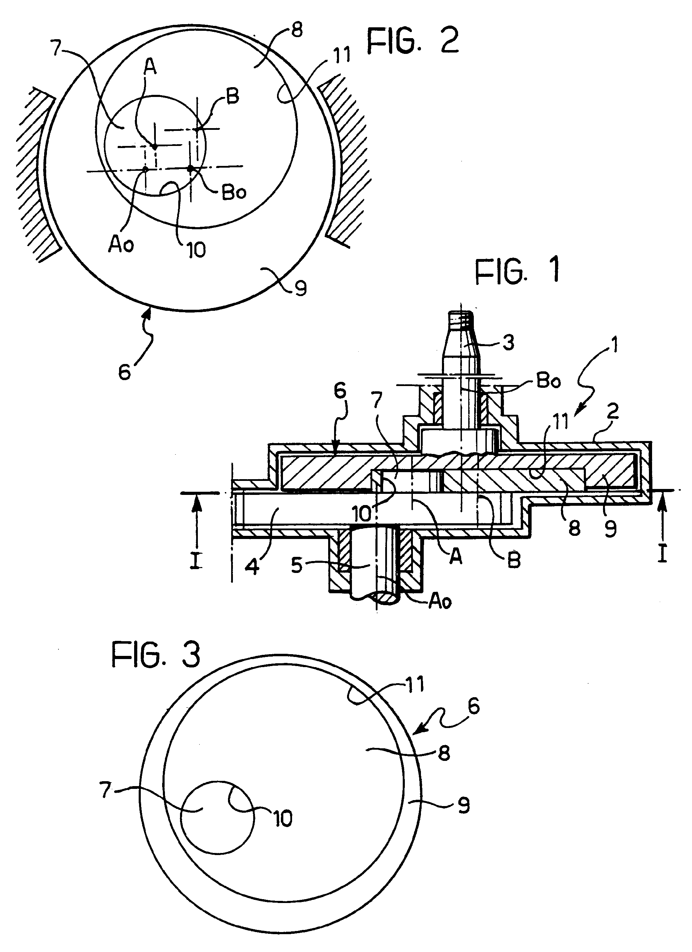

With reference initially to Figures 1 and 2, a windscreen wiper unit for motor vehicles, for example a headlamp wiper, is generally indicated 1. The unit 1 includes a casing 2 from which an output shaft 3 projects for the attachment of an arm, not illustrated, carrying a wiper blade.

The output shaft 3 can be driven in reciprocating rotary motion by means of a conventional geared motor unit of which Figure 1 shows only the final helical reduction gear 4 which is supported by the casing 2 for rotation by a shaft 5.

The axes of the gear 4 and the output shaft 3, indicated $A_O$ and $B_O$ respectively, are parallel and offset.

The continuous rotation of the gear 4 is transformed into a reciprocating rotary motion of the output shaft 3 by means of a small, compact transmission unit, generally indicated 6.

The transmission unit 6 is constituted by three discs 7, 8, 9 interposed axially between the gear 4 and the output shaft 3 and fitted into each other in the manner described below.

The inner disc 7, which is of small diameter, is fixed frontally and eccentrically to the gear 4 and is therefore rotated about the axis $A_O$ thereof. The axis of the inner disc 7 is indicated A and is parallel to the axes $A_O$ and $B_O$.

The inner disc 7 is fitted concentrically for rotation in an axial cavity 10 formed eccentrically in the larger-diameter intermediate disc 8 whose axis is indicated B.

The outer disc 9 has an even larger diameter than the intermediate disc 8 and is fixed coaxially to the output shaft 3 which supports it for rotation within the casing 2. The disc 9 has an eccentric axial cavity 11 within which the intermediate disc 8 is eccentrically engaged for rotation.

The relative positions of the axes $A_O$ of the gear 4, A of the inner disc 7, B of the intermediate disc 8, and $B_O$ of the outer disc 9 and the output shaft 3 are shown in Figure 2.

A movable electrical contact (not illustrated) may conveniently be associated with the outer disc 3 for cooperating with a fixed contact (not illustrated) carried by the casing 2, so as to form a travel limiting switch for repositioning the output shaft 3 and hence the blade-carrying arm in the rest position. This arrangement achieves more precise repositioning since it is free from errors due to any play in the transmission 1 upstream of the outer disc 9 (and hence of the output shaft 3).

The variant shown in Figure 3 is generally similar to that of Figure 2 and differs therefrom only in the dimensions of the three discs. In effect, in this case, the inner disc 7 and the outer disc 9 have smaller diameters than in the previous case, whilst the intermediate disc 8 has a larger diameter. This solution enables a further reduction in the transverse bulk of the transmission unit 6 and hence of the unit 1 as a whole.

## Claims

1. A transmission unit for motor vehicle windscreen wipers, particularly for headlamp and rear-screen wipers, which can transform a continuous rotation of an input member (4) into a reciprocating rotary motion of an output shaft (3), the input member and the output shaft having respective parallel and offset axes ($A_O$, $B_O$), characterised in that it includes thre eccentric discs (7, 8, 9) which are axially interposed between the input member (4) and the output shaft (3) with their respective axes (A, B, $B_O$) parallel to the axes ($A_O$, $B_O$) of the input member and the output shaft, and of which:
    – the first disc (7) has its axis (A) fixed to the input member (4) and offset relative thereto,
    – the second disc (8) has an eccentric axial cavity (10) in which the first disc (7) is engaged concentrically for rotation, and
    – the third disc (9) is fixed coaxially to the output shaft (3) and has an eccentric axial cavity (11) in which the second disc (8) is engaged eccentrically for rotation.

## Patentansprüche

1. Getriebeeinheit für Kraftfahrzeug-Scheibenwischer, insbesondere für Scheinwerfer- und Heckscheibenwischer, welche eine kontinuierliche Drehung eines Eingangsteiles (4) in eine hinund hergehende Drehbewegung einer Ausgangswelle (3) umsetzen kann, wobei das Eingangsteil und die Ausgangswelle jeweils parallele und versetzte Achsen ($A_O$, $B_O$) aufweisen, dadurch gekennzeichnet, daß die Einheit drei Exzenterscheiben (7, 8, 9) aufweist, die axial zwischen dem Eingangsteil (4) und der Ausgangswelle (3) eingefügt sind, wobei ihre jeweiligen Achsen (A, B, $B_O$) parallel zu den Achsen ($A_O$, $B_O$) des Eingangsteils und der Ausgangswelle verlaufen, und von denen:
    – die erste Scheibe (7) mit ihrer Achse (A) an dem Eingangsteil (4), und versetzt zu diesem, befestigt ist,
    – die zweite Scheibe (8) eine axiale, außermittig angeordnete Ausnehmung (10) aufweist, in die die erste Scheibe (7) zu ihrer Drehung konzentrisch eingreift, und
    – die dritte Scheibe (9) koaxial an der Ausgangswelle (3) befestigt ist und eine axiale, außermittig angeordnete Ausnehmung (11) äufweist, in die die zweite Scheibe (8) zu ihrer Drehung exzentrisch eingreift.

## Revendications

1. Ensemble de transmission pour essuie-glaces de véhicules à moteur, en particulier pour essuie-glaces de projecteurs et de lunettes arrière, apte à transformer une rotation continue d'un élément d'entrée (4) en un mouvement rotatoire alternatif d'un arbre de sortie (3), l'élément d'entrée et l'arbre de sortie présentant des axes respectifs ($A_O$, $B_O$) parallèles et décalés, caractérisé par le fait qu'il présente trois disques excentrés (7, 8, 9) qui sont interposés axialement entre l'élément d'entrée (4) et l'arbre de sortie (3), dont les axes respectifs (A, B, $B_O$) sont parallèles aux axes ($A_O$, $B_O$) de l'élément d'entrée et de l'arbre de sortie, et parmi lesquels :
    – l'axe (A) du premier disque (7) est assujetti à l'élément d'entrée (4), par rapport auquel il est décalé,
    – le deuxième disque (8) possède une cavité axiale excentrée (10), dans laquelle le premier disque (7) est engagé concentriquement en vue d'accomplir une rotation, et
    – le troisième disque (9) est assujetti coaxialement à l'arbre de sortie (3), et comporte une cavité axiale excentrée (11) dans laquelle le deuxième disque (8) est engagé concentriquement en vue d'accomplir une rotation.

FIG. 2

FIG. 1

FIG. 3